# FASCICULE DE BREVET EUROPEEN

(11) **EP 1 610 403 B1**
(45) Date de publication et mention de la délivrance du brevet: **20.08.2014**
(21) Numéro de dépôt: 05291300.1
(22) Date de dépôt: 17.06.2005
(51) Int. Cl.: H01M 10/30, H01M 10/24, H01M 10/34, H01M 10/42, H01M 4/62

(54) **Générateur électrochimique alcalin à durée de vie améliorée**
Elektrochemischer alkalischer Generator mit verbesserter Lebensdauer
Electrochemical alkaline generator with improved service life

(30) Priorité: 25.06.2004 FR 0406993
(43) Date de publication de la demande: 28.12.2005
(73) Titulaire: Saft Groupe S.A., 93170 Bagnolet (FR)
(72) Inventeur: Bernard, Patrick, 33000 Bordeaux (FR); Goubault, Lionel, 33700 Merignac (FR); Hezeque, Thierry, 33240 Aubie Espessas (FR)
(74) Mandataire: Hirsch & Associés

(56) Documents cités:
- EP-A- 0 587 973
- EP-A- 0 587 974
- EP-A- 0 833 397
- EP-A- 1 006 598
- US-A1- 2001 033 970
- US-A1- 2003 129 491
- PATENT ABSTRACTS OF JAPAN vol. 1997, no. 04, 30 avril 1997 (1997-04-30) & JP 08 329937 A (MATSUSHITA ELECTRIC IND CO LTD), 13 décembre 1996 (1996-12-13)
- PATENT ABSTRACTS OF JAPAN vol. 2003, no. 12, 5 décembre 2003 (2003-12-05) & JP 2003 249222 A (SANYO ELECTRIC CO LTD), 5 septembre 2003 (2003-09-05) & WO 03/050898 A (SANYO ELECTRIC CO., LTD; SHINYAMA, KATSUHIKO; AKITA, HIROYUKI; TANAKA,) 19 juin 2003 (2003-06-19)

## Description

### DOMAINE TECHNIQUE

L'invention a pour objet un générateur électrochimique alcalin ayant une durée de vie améliorée, ainsi que ses procédés de préparation.

### ETAT DE LA TECHNIQUE

Les générateurs électrochimiques alcalins, aussi appelés accumulateurs alcalins, sont en général de type NiCd ou NiMH. Le facteur principal limitant la durée de vie des accumulateurs NiMH est la corrosion de l'alliage hydrurable de l'électrode négative. Sans vouloir être liée par une théorie, la demanderesse pense que la réaction de corrosion de l'alliage en milieu alcalin entraîne la consommation d'eau et donc l'assèchement du séparateur, responsable de l'augmentation de la résistance interne de l'accumulateur et par conséquent la baisse de puissance électrochimique. Pour réduire la cinétique de corrosion de l'alliage, de nombreux travaux ont porté sur la réduction de la cinétique de corrosion. Toutefois, la modification de la composition de l'alliage reste très limitée du fait des contraintes imposées à l'alliage (capacité élevée, pression de plateau d'hydrogène inchangée, etc.). De plus, les solutions visant à l'ajout de composés réduisant la cinétique de corrosion (notamment l'oxyde d'yttrium) sont coûteuses et difficiles à mettre en oeuvre. Ces problèmes se posent en fait pour tout type d'accumulateur alcalin.

On recherche donc des générateurs électrochimiques alcalins ayant une durée de vie améliorée.

EP-A-1006598 décrit le dépôt, sur l'électrode positive de type frittée, d'une première couche de Co(OH)₂ puis une seconde couche d'un matériau qui peut être Ba(OH)₂ ou Sr(OH)₂. Ces couches sont indiquées comme augmentant la capacité au cours des décharges à courant fort et améliorant l'autodécharge de l'accumulateur.

EP-A-0587974 décrit l'addition de Ba(OH)₂ ou Sr(OH)₂ dans l'électrode positive, ainsi que de Co et Mn ou Ti et V dans l'électrode négative, notamment dans le but d'améliorer la chargeabilité à chaud de l'accumulateur.

US-A-2001033970 décrit l'addition de Cobalt dans l'électrode positive de type frittée et le dépôt d'une couche par exemple de Sr(OH)₂.

US-A-2003129491 décrit l'addition de Sr(OH)₂ dans l'électrode positive de type frittée, ainsi que d'un hydroxyde d'un métal choisi parmi Sc, Y, Ln dans l'électrode négative. Cette addition est indiquée comme empêchant l'oxydation de Ni dans l'alliage de l'électrode négative par l'oxygène produit à l'électrode positive pendant la charge. Ce document décrit aussi des caractéristiques de cyclage améliorées, en particulier à basse température. Ce document repose aussi sur l'ajout de composés de type à base d'yttrium.

Aucun des documents ci-dessus n'enseigne ni ne décrit le générateur selon l'invention.

### RESUME DE L'INVENTION

L'invention fournit donc un générateur électrochimique alcalin, à durée de vie améliorée, comprenant au moins un composé à base de baryum ou de strontium, ledit composé étant présent dans le générateur à l'exception de la cathode. L'invention décrit également le procédé de fabrication d'un tel générateur.

### EXPOSE DETAILLE DE MODES DE REALISATION DE L'INVENTION

Le générateur ou accumulateur (ces deux termes étant utilisés de façon interchangeable dans la présente description) comprend de façon générale une électrode positive et une électrode négative, un séparateur entre celles-ci et un électrolyte. Le générateur peut être de type bouton, cylindrique (avec un bobineau ou un enroulement en spirale) ou prismatique.

L'électrode positive comprend une matière électrochimiquement active qui est principalement un hydroxyde de nickel Ni(OH)₂, et éventuellement un ou plusieurs hydroxydes d'autres composés tels que Zn, Co, Ca, Cd, Mg, Mn, Al, etc. qui sont syncristallisés avec l'hydroxyde de nickel.

L'électrode négative comprend une matière électrochimiquement active qui peut être du cadmium ou un composé intermétallique M hydrurable (notamment de type AB₅ tel que LaNi₅ polysubstitué) ou tout matériau classique dans l'art. On parle d'accumulateur alcalin de type NiCd ou NiMH, respectivement. On peut aussi avoir des couples Ni/Fe, Ni/H₂ ou Ni/Zn.

L'électrolyte est une solution aqueuse alcaline concentrée comprenant au moins un hydroxyde (KOH, NaOH, LiOH), en une concentration généralement de l'ordre de plusieurs fois la normalité.

Le séparateur est généralement composé de fibres en polyoléfine (par ex. polypropylène) ou polyamide poreux non-tissé.

Le générateur selon l'invention comprend, soit dans l'électrode négative, soit dans l'élément lui-même, un composé à base de baryum ou de strontium qui peut être choisi dans le groupe consistant en oxyde de baryum BaO, oxyde de strontium SrO, hydroxyde de baryum Ba(OH)₂, hydroxyde de strontium Sr(OH)₂, sulfate de baryum BaSO₄, sulfate de strontium SrSO₄ et leurs mélanges. On préférera l'hydroxyde de baryum Ba(OH)₂ et l'hydroxyde de strontium Sr(OH)₂.

Pour un générateur étanche, la quantité ajoutée sera en général inférieure ou égale à 6.10⁻³ mol/Ah de baryum ou de strontium, de préférence entre 1.10⁻³ mol/Ah et 6.10⁻³ mol/Ah, avantageusement entre 3.10⁻³ mol/Ah et 6.10⁻³ mol/Ah.

Pour un générateur ouvert, la quantité ajoutée pourra être supérieure à 6.10⁻³ mol/Ah.

Le procédé de préparation du générateur selon l'invention n'est pas éloigné des procédés de fabrication des générateurs classiques (sans composé ajouté).

De façon classique on prépare les pâtes pour électrodes, on fabrique les électrodes, puis on superpose l'électrode positive, un séparateur, l'électrode négative. On imprègne le faisceau avec un électrolyte alcalin aqueux. On ferme ensuite le générateur.

L'invention s'applique à tout montage d'électrodes.

Selon un premier mode de réalisation, pour lequel le générateur comprend le composé dans l'électrode négative, le procédé de fabrication comprend les étapes suivantes:
(i) préparation d'une pâte pour électrode négative comprenant ledit composé;
(ii) assemblage de l'électrode négative; et
(iii) assemblage dudit générateur avec cette électrode négative.

On pourrait aussi effectuer un dépôt d'une couche dudit composé sur la surface de l'électrode négative.

Selon un second mode de réalisation, pour lequel le générateur comprend le composé directement dans l'élément, le composé peut être introduit par exemple dans le coeur d'un élément (en particulier cylindrique), au dessus ou au dessous du faisceau, dans le séparateur, ou en suspension dans l'électrolyte. Ces exemples ne sont en aucun cas limitatifs.

Selon un second mode de réalisation, le procédé de fabrication d'un générateur selon l'invention, comprenant un faisceau électrochimique dans un godet, comprend les étapes suivantes:
(i) préparation d'un faisceau électrochimique;
(ii) introduction dudit composé dans le godet;
(iii) insertion du faisceau dans ledit godet; ou les étapes (ii) et (iii) pouvant être inversées;
   et
(iv) assemblage final du générateur.

Il est entendu qu'il est possible d'avoir la combinaison du composé de baryum et/ou strontium à la fois selon l'invention et dans la cathode (selon l'art antérieur).

Ainsi qu'on peut le constater, la solution selon l'invention est effectivement très simple et/ou ne présente pas de surcoût notable.

Le générateur secondaire selon l'invention trouve à s'appliquer dans tous les domaines classiques, tels que appareils nomades ou fixes.

L'accumulateur selon l'invention peut être du type ouvert (ouvert ou semi-ouvert) ou du type étanche.

### EXEMPLES

Les exemples suivants illustrent l'invention sans la limiter.

L'électrode positive de référence P1 est réalisée avec une pâte ayant comme composition en % en poids:
- Matière active 71
- Matériau conducteur Co(OH)₂ 8
- Liant PTFE 0.8
- Polymère cellulosique CMC 0.2
- Eau 20

La matière électrochimiquement active pulvérulente est constituée d'un hydroxyde à base de nickel, et contenant les additifs suivants: cobalt et zinc. La viscosité de la pâte est ajustée avec de l'eau. La pâte est introduite dans un support conducteur tridimensionnel qui est une mousse de nickel de porosité d'environ 95%. Une fois la pâte introduite dans le support, l'ensemble est séché afin d'en éliminer l'eau, laminé puis découpé pour obtenir l'électrode aux dimensions désirées. L'électrode finie présente une porosité de 30% et un grammage de 17.5g/dm² de matière enduite.

L'électrode positive P2 est réalisée avec une pâte ayant comme composition en % en poids:
- Matière active 66.3
- Matériau conducteur Co(OH)₂ 8
- Ba(OH)₂ 4.7
- Liant PTFE 0.8
- Polymère cellulosique CMC 0.2
- Eau 20

Le même procédé que pour l'électrode P1 est suivi. Les caractéristiques dimensionnelles de l'électrode positive sont identiques à celles de l'électrode positive P1. L'ajout de 4.7 % de Ba(OH)₂ correspond à l'ajout de 1.17 10⁻³ mol/Ah dans l'élément.

L'électrode positive P3 est réalisée avec une pâte ayant comme composition en % en poids:
- Matière active 66.3
- Matériau conducteur Co(OH)₂ 8
- Sr(OH)₂ 4.7
- Liant PTFE 0.8
- Polymère cellulosique CMC 0.2
- Eau 20

Le même procédé que pour l'électrode P2 est suivi. L'ajout de 4.7% de Sr(OH)₂ dans l'électrode positive correspond à l'ajout de 1.64 10⁻³ mol/Ah dans l'élément.

L'électrode négative de référence N1 est réalisée avec une pâte ayant comme composition en % en poids:
- Matière active 80
- Liant SBR 0.5
- Carbone 0.3
- Polymère cellulosique CMC 0.2
- Eau 19

La matière électrochimiquement active est un composé intermétallique de type AB₅ capable de former un hydrure une fois chargé. La viscosité de la pâte est ajustée avec de l'eau. La pâte est introduite dans le support conducteur qui est une mousse de nickel. L'ensemble est ensuite séché afin d'en éliminer l'eau, puis laminé à une porosité de 25% pour obtenir l'électrode. La capacité de l'électrode négative est supérieure à celle de l'électrode positive.

L'électrode négative N2 est réalisée avec une pâte ayant comme composition en % en poids:
- Matière active 76.2
- Ba(OH)₂ 3.8
- Liant SBR 0.5
- Carbone 0.3
- Polymère cellulosique CMC 0.2
- Eau 19

On suit le même procédé que pour l'électrode N1. L'ajout de 3.8% de Ba(OH)₂ dans l'électrode négative correspond à l'ajout de 1.17 10⁻³ mol/Ah dans l'élément.

L'électrode négative N3 est réalisée avec une pâte ayant comme composition en % en poids:
- Matière active 76.2
- Sr(OH)₂ 3.8
- Liant SBR 0.5
- Carbone 0.3
- Polymère cellulosique CMC 0.2
- Eau 19

On suit le même procédé que pour l'électrode N1. L'ajout de 3.8% de Sr(OH)₂ dans l'électrode négative correspond à l'ajout de 1.64 10⁻³ mol/Ah dans l'élément.

Un générateur électrochimique secondaire étanche NiMH de format AA et dont la capacité nominale C est de 1200mAh est constitué des électrodes positive et négative décrites ci-dessus. Les électrodes sont séparées par un séparateur non-tissé de polypropylène pour former le faisceau électrochimique. Le faisceau ainsi spiralé est inséré dans un godet métallique et imprégné d'un électrolyte alcalin qui est une solution alcaline aqueuse constituée d'un mélange d'hydroxyde de potassium KOH 7.5N, d'hydroxyde de sodium NaOH 0.4N et d'hydroxyde de lithium LiOH 0.5N pour constituer l'accumulateur. Onze accumulateurs de ce type sont fabriqués. Les caractéristiques des matières actives de ces onze générateurs sont indiquées dans le tableau 1. L'accumulateur A est la référence. Pour les accumulateurs de D à I, la poudre d'hydroxyde de baryum ou de strontium est introduite au coeur de l'élément dans l'espace libre, avant remplissage d'électrolyte.

**Tableau 1.**

| Ex | Positive | Négative | Ba(OH)₂ (mol/Ah) | Sr(OH)₂ (mol/Ah) |
|---|---|---|---|---|
| A | P1 | N1 | 0 | 0 |
| B | P2 | N1 | 1.17 10⁻³ | 0 |
| C | P3 | N1 | 0 | 1.64 10⁻³ |
| D | P1 | N1 | 1.17 10⁻³ | 0 |
| E | P1 | N1 | 2.91 10⁻³ | 0 |
| F | P1 | N1 | 5.84 10⁻³ | 0 |
| G | P1 | N1 | 8.75 10⁻³ | 0 |
| H | P1 | N1 | 0 | 1.64 10⁻³ |
| I | P1 | N1 | 0 | 4.1 10⁻³ |
| J | P1 | N2 | 1.17 10⁻³ | 0 |
| K | P1 | N3 | 0 | 1.64 10⁻³ |

### Performances électrochimiques

Après un repos de 48 h à température ambiante et neuf cycles d'activation, la pression interne de l'élément est mesurée au cours d'une charge de 2 h à C/1. La soupape de sécurité est étalonnée pour se déclencher à une pression supérieure à 16 bars.

Les accumulateurs subissent ensuite un test de cyclage à température ambiante, défini comme suit:
- charge pendant 66 minutes à courant constant de C/1;
- repos pendant 3 minutes;
- décharge à courant constant de C/1 jusqu'à une tension de 0.9V aux bornes de l'élément.

La capacité au cycle 11 ainsi que le nombre de cycles nécessaires pour que la capacité de l'élément devienne inférieure à 80% de sa capacité nominale sont indiqués dans le tableau 2.

**Tableau 2**

| Ex | A | B | C | D | E | F | G | H | I | J | K |
|---|---|---|---|---|---|---|---|---|---|---|---|
| Capacité Cycle 11 (mAh) | 1211 | 1180 | 1175 | 1210 | 1205 | 1218 | 1100 | 1210 | 1210 | 1208 | 1215 |
| Pression max (bar) | 8.5 | 8.7 | 8.6 | 9.3 | 10.5 | 13.1 | 16.5 | 9.2 | 11.1 | 8.6 | 8.3 |
| Durée de vie (cycles) | 347 | 343 | 338 | 377 | 407 | 455 | 212 | 385 | 421 | 369 | 381 |

Les résultats montrent que l'ajout de baryum ou de strontium dans l'accumulateur ne modifie pas les performances électrochimiques en décharge à C/1 des accumulateurs.

Les résultats des exemples B et C montrent qu'il n'y a pas d'amélioration de la durée de vie en cyclage lorsque l'hydroxyde de baryum ou de strontium est ajouté dans l'électrode positive. Au contraire, lorsque l'hydroxyde de baryum ou de strontium est ajouté dans l'accumulateur (série D à I), on constate une forte amélioration de la durée de vie en cyclage. Cette amélioration apparaît aussi corrélée à la quantité d'additif ajouté. Dans le cas de la série G, la quantité d'hydroxyde de baryum ajoutée est telle qu'elle conduit à une augmentation de la pression interne de l'élément et une ouverture de la soupape. On préfère, dans les accumulateurs étanches selon l'invention, une quantité ajoutée inférieure ou égale à environ 6.10⁻³ mol/Ah afin d'obtenir une pression interne qui reste inférieure à la pression d'ouverture de la soupape (ici 16 bars); on pourrait cependant augmenter cette quantité en diminuant la quantité d'un autre composant du générateur.

Dans le cas d'un accumulateur ouvert, selon l'invention, la quantité ajoutée peut être supérieure à 6.10⁻³ mol/Ah.

Les exemples J et K font apparaître que l'ajout de baryum ou de strontium dans l'électrode négative permet également d'améliorer la durée de vie de l'accumulateur.

## Revendications

1. Générateur électrochimique alcalin comprenant au moins un composé à base de baryum ou de strontium, ledit composé étant présent dans le générateur à l'exception de la cathode.

2. Générateur selon la revendication 1, dans lequel ledit composé est choisi dans le groupe consistant en oxyde de baryum BaO, oxyde de strontium SrO, hydroxyde de baryum Ba(OH)₂, hydroxyde de strontium Sr(OH)₂, sulfate de baryum BaSO₄, sulfate de strontium SrSO₄ et leurs mélanges.

3. Générateur selon la revendication 2, dans lequel le composé est l'hydroxyde de baryum Ba(OH)₂.

4. Générateur selon la revendication 2, dans lequel le composé est l'hydroxyde de strontium Sr(OH)₂.

5. Générateur selon l'une des revendications 1 à 4, dans lequel le composé est :
- ajouté en une quantité inférieure ou égale à 6.10⁻³ mol/Ah de baryum ou de strontium, de préférence entre 1.10⁻³ mol/Ah et 6.10⁻³ mol/Ah, avantageusement entre 3.10⁻³ mol/Ah et 6.10⁻³ mol/Ah pour un générateur de type étanche; ou
- ajouté en une quantité pouvant être supérieure à 6.10⁻³ mol/Ah pour un générateur de type ouvert.

6. Générateur selon l'une des revendications 1 à 5, du type NiCd.

7. Générateur selon l'une des revendications 1 à 5, du type NiMH.

8. Générateur selon l'une des revendications 1 à 7, dans lequel ledit composé est ajouté dans l'électrode négative.

9. Générateur selon l'une des revendications 1 à 7, dans lequel ledit composé est ajouté au dessus ou au dessous du faisceau.

10. Générateur selon l'une des revendications 1 à 7, dans lequel ledit composé est ajouté dans le séparateur.

11. Générateur selon l'une des revendications 1 à 7, dans lequel ledit composé est ajouté en suspension dans l'électrolyte.

12. Procédé de fabrication d'un générateur selon la revendication 8, comprenant les étapes suivantes:
(i) préparation d'une pâte pour électrode négative comprenant ledit composé;
(ii) assemblage de l'électrode négative; et
(iii) assemblage dudit générateur avec cette électrode négative.

13. Procédé de fabrication d'un générateur selon la revendication 9, comprenant un faisceau électrochimique dans un godet, comprenant les étapes suivantes:
(i) préparation d'un faisceau électrochimique;
(ii) introduction dudit composé dans le godet;
(iii) insertion du faisceau dans ledit godet; ou les étapes (ii) et (iii) pouvant être inversées;
et
(iv) assemblage final du générateur.

## Patentansprüche

1. Alkalischer elektrochemischer Stromerzeuger, der mindestens eine Verbindung auf Basis von Barium oder Strontium umfasst, wobei die Verbindung in dem Stromerzeuger vorliegt, mit Ausnahme der Kathode.

2. Stromerzeuger nach Anspruch 1, wobei die Verbindung aus der Gruppe ausgewählt ist, die aus Bariumoxid BaO, Strontiumoxid SrO, Bariumhydroxid Ba(OH)₂, Strontiumhydroxid Sr(OH)₂, Bariumsulfat BaSO₄, Strontiumsulfat SrSO₄ und aus deren Mischungen besteht.

3. Stromerzeuger nach Anspruch 2, wobei es sich bei der Verbindung um Bariumhydroxid Ba(OH)₂ handelt.

4. Stromerzeuger nach Anspruch 2, wobei es sich bei der Verbindung um Strontiumhydroxid Sr(OH)₂ handelt.

5. Stromerzeuger nach einem beliebigen der Ansprüche 1 bis 4, wobei die Verbindung:
- in einer Menge von höchstens 6.10⁻³ mol/Ah an Barium oder an Strontium, vorzugsweise zwischen 1.10⁻³ mol/Ah und 6.10⁻³ mol/Ah, vorteilhafterweise zwischen 3.10⁻³ mol/Ah und 6.10⁻³ mol/Ah zugesetzt wird, sofern es sich um einen Stromerzeuger abgedichteter Bauart handelt; oder
- in einer Menge, die mehr als 6.10⁻³ mol/Ah betragen kann, zugesetzt wird, sofern es sich um einen Stromerzeuger offener Bauart handelt.

6. Stromerzeuger nach einem der Ansprüche 1 bis 5, vom Typ NiCd.

7. Stromerzeuger nach einem der Ansprüche 1 bis 5, vom Typ NiMH.

8. Stromerzeuger nach einem beliebigen der Ansprüche 1 bis 7, wobei die Verbindung derart zugesetzt wird, dass sie in der negativen Elektrode vorliegt.

9. Stromerzeuger nach einem beliebigen der Ansprüche 1 bis 7, wobei die Verbindung derart zugesetzt wird, dass sie oberhalb oder unterhalb der Baugruppe vorliegt.

10. Stromerzeuger nach einem beliebigen der Ansprüche 1 bis 7, wobei die Verbindung derart zugesetzt wird, dass sie im Separator vorliegt.

11. Stromerzeuger nach einem beliebigen der Ansprüche 1 bis 7, wobei die Verbindung derart zugesetzt wird, dass sie im Elektrolyten in Suspension vorliegt.

12. Verfahren zur Herstellung eines Stromerzeugers nach dem Anspruch 8, welches die folgenden Schritte umfasst:
(i) Herstellen einer Paste, die für die negative Elektrode bestimmt ist und die Verbindung umfasst;
(ii) Zusammenfügen der negativen Elektrode; und
(iii) Zusammenfügen des Stromerzeugers mit der negativen Elektrode.

13. Verfahren zur Herstellung eines Stromerzeugers nach dem Anspruch 9, welcher eine elektrochemische Baugruppe in einem Becher umfasst, wobei es die folgenden Schritte umfasst:
(i) Herstellen einer elektrochemischen Baugruppe;
(ii) Einführen der Verbindung in den Becher;
(iii) Einfügen der Baugruppe in den Becher;
wobei die Schritte (ii) und (iii) auch in umgekehrter Reihenfolgen erfolgen können; und
(iv) abschließendes Zusammenfügen des Stromerzeugers.

## Claims

1. An alkaline electrochemical cell including at least one compound based on barium or strontium, said compound being present in the cell with the exception of the cathode.

2. A cell according to claim 1, in which said compound is selected from the group consisting of: barium oxide BaO, strontium oxide SrO, barium hydroxide Ba(OH)₂, strontium hydroxide Sr(OH)₂, barium sulfate BaSO₄, strontium sulfate SrSO₄, and mixtures thereof.

3. A cell according to claim 2, in which the compound is barium hydroxide Ba(OH)₂.

4. A cell according to claim 2, in which the compound is strontium hydroxide Sr(OH)₂.

5. A cell according to any one of claims 1 to 4, in which the compound is:
- added in a quantity less than or equal to 6x10⁻³ mol/Ah of barium or strontium, preferably in the range 1x10⁻³ mol/Ah to 6x10⁻³ mol/Ah advantageously in the range 3x10⁻³ mol/Ah to 6x10⁻³ mol/Ah for a sealed type cell; or
- added in a quantity that may exceed 6x10⁻³ mol/Ah for an open type cell.

6. A cell according to any one of claims 1 to 5, of the NiCd type.

7. A cell according to any one of claims 1 to 5, of the NiMH type.

8. A cell according to any one of claims 1 to 7, in which said compound is added in the negative electrode.

9. A cell according to any one of claims 1 to 7, in which said compound is added above or below the electrochemical bundle.

10. A cell according to any one of claims 1 to 7, in which said compound is added in the separator.

11. A cell according to any one of claims 1 to 7, in which said compound is added in suspension in the electrolyte.

12. A method of fabricating a cell according to claim 8, comprising the following steps:
i) preparing a negative electrode paste including said compound;
ii) assembling the negative electrode; and
iii) assembling said cell with said negative electrode.

13. A method of fabricating a cell according to claim 9, comprising an electrochemical bundle in a can, the method comprising the following steps:
i) preparing an electrochemical bundle ;
ii) introducing said compound into the can;
iii) inserting the bundle into said can; or steps ii) and iii) may be interchanged; and
iv) final assembly of the cell.
